# EUROPÄISCHE PATENTSCHRIFT

(11) **EP 2 233 994 B1**
(45) Veröffentlichungstag und Bekanntmachung des Hinweises auf die Patenterteilung: **02.04.2014**
(21) Anmeldenummer: 10157856.5
(22) Anmeldetag: 25.03.2010
(51) Int. Cl.: G05B 19/042, G05B 19/05

(54) **Modulare Vorrichtung zur Überwachung und Bedienung von intelligenten Prozesssensoren**
Modular device for monitoring and operating intelligent process sensors
Dispositif modulaire de surveillance et de fonctionnement de capteurs de processus intelligents

(30) Priorität: 25.03.2009 DE 102009001824; 08.05.2009 DE 102009002949
(43) Veröffentlichungstag der Anmeldung: 29.09.2010
(73) Patentinhaber: Hamilton Bonaduz AG, 7402 Bonaduz (CH)
(72) Erfinder: Arquint, Philipp, CH-7402 Bonaduz/GR (CH); Schönfuss, Dirk, CH-7015 Tamins/GR (CH)
(74) Vertreter: Gulde Hengelhaupt Ziebig & Schneider

(56) Entgegenhaltungen:
- DE-A1- 10 218 606
- DE-A1- 10 255 741
- DE-A1-102006 020 341
- US-A1- 2005 289 276

## Beschreibung

### Anwendungsgebiet der Erfindung

In der Prozessautomatisierungstechnik werden häufig Prozessgrössen, wie z.B. der pH-Wert, die Leitfähigkeit oder der Partialdruck eines gelösten Gases, mit Hilfe von Sensoren aufgenommen, welche in der Regel über Kabel und Steckverbinder an einen Messumformer angeschlossen sind. Die Einheit aus Sensor und Messumformer wird auch häufig als Feldgerät bezeichnet. Der Messumformer erfasst die Signale der Sensoren, macht sie häufig vor Ort mittels eines Displays sichtbar, wandelt sie in Signale, welche analog z.B. über eine 4...20 mA Schnittstelle oder digitalisiert mit Hilfe verschiedener üblicher, standardisierter, offener Kommunikations-Protokolle (z.B. HART- Datenübertragung) oder über Feldbussysteme (z.B. Foundation Fieldbus, Profibus etc.) drahtgebunden zur Verarbeitung an ein übergeordnetes Prozessleitsystem weitergeleitet werden.

Auftretende Probleme bei der Bestimmung von Prozessgrössen und der Übertragung der Messergebnisse an übergeordnete Einheiten lassen sich zum Teil auf technische Ursachen zurückführen. So können z.B. eine mangelnde galvanische Trennung oder ungeeignete Verbindungsmittel zwischen Sensor und Messumformer oder der Anschluss von Sensoren, die nicht zum Messumformer passen, zu ungenauen oder falschen Messungen führen. Erdschleifen, Kabeldefekte oder einstreuende Signale können die drahtgebundene Übertragung der Daten bzw. Signale an das übergeordnete Prozessleitsystem stören.

Zur Vermeidung von Datenleitungen zwischen dem Messumformer und einer übergeordneten Einheit gewinnen seit kurzem Funknetzwerke mit Funkfeldgeräten (Messumformer die mit Funkmodulen ausgestattet sind) als Kommunikationssystem immer mehr an Bedeutung. Derartige Systeme weisen zur Vor-Ort-Bedienung Handbediengeräte auf, die ebenfalls drahtlos mit den Funkfeldgeräten kommunizieren können. Jedoch sind Funkfeldgeräte, die keine kabelgebundene Kommunikation aufweisen, nicht immer erwünscht, da die Funkverbindung ausfallen kann und Verzögerungen oder Fehler im Regelkreis auf Grund falscher oder keiner Sensordaten schwerwiegende Folgen für die Prozesssicherheit haben können.

Problematisch sind aber auch Fehler und Mängel bei Wartung und Bedienung zur Aufrechterhaltung der Funktionstüchtigkeit der verwendeten Sensoren, wobei der Wartungsaufwand je nach Art und Qualität des zu betrachtenden Sensors aber auch in Abhängigkeit von seiner Zugänglichkeit stark schwanken kann. Es ist notwendig, Messdaten und den Zustand des Sensors vor Ort an der Messstelle überprüfen zu können um ggf. schnell zu handeln. Dies wird erschwert, wenn Messumformer und Sensor z.B. aus Platzgründen weit voneinander entfernt sind.

Gefragt sind deshalb intelligente Vorrichtungen, welche sowohl die technischen Probleme bei der Messung von Prozessgrössen lösen bzw. minimieren, eine problemlose Kommunikation zur übergeordneten Einheit sicherstellen, als auch die Wartung und Bedienung, sowie die Überwachung von Prozesssensoren einschliesslich der Visualisierung der Messdaten vor Ort selbst vereinfachen und erleichtern. Dabei soll der Platzbedarf derartiger Systeme möglichst gering sein.

### Stand der Technik

Bei gewissen Sensortypen erfolgt die Digitalisierung des Messsignals bereits im Sensorkopf, welcher Teil eines kontaktlosen, galvanisch trennenden Steckverbindersystems ist. Die Datenübertragung zwischen Sensor und Messumformer erfolgt bereits digital mittels eines proprietären Protokolls und die Funktionen des Messumformers zur Analog-Digital-Wandlung und galvanischen Trennung und die damit einhergehenden Probleme entfallen. Derartige Sensoren sind z.B. unter dem Namen "Memosens" von Endress und Hauser Conducta Gesellschaft für Mess- und Regeltechnik mbH + Co. KG erhältlich. Zur Vermeidung von Datenleitungen zwischen Messumformer und einer übergeordneten Einheit z.B. bei schlecht zugänglichen Messstellen, können Messumformer mit Anschluss von Sensoren über das galvanisch trennende Steckverbindersystem, wie in DE10255741A1 beschrieben, mit einer Sende- und Empfangseinheit zum drahtlosen Datenaustausch mit einer komplementären Empfangs- bzw. Empfangs- und Sendestation ausgestattet sein. Die Energieversorgung des Messumformers kann autonom mittels Batterie, Photozelle oder Brennstoffzelle erfolgen. Der damit verbundene, begrenzte Energievorrat sowie die Gefahr von Funkunterbrüchen stehen jedoch dem Wunsch der Anwender nach einem wartungsarmen, sicheren Betrieb entgegen. Deshalb ist über eine Versorgungsleitung, welche zugleich redundant zur relativ störungsfreien und deshalb häufig verwendeten Datenübertragung durch Regulierung des Versorgungsstromes (4...20 mA) oder nach HART- Standard verwendet wird, ebenfalls möglich. Dieses System ist jedoch an die Verwendung von Messumformern gebunden, welche das proprietäre Protokoll zur Kommunikation zwischen Sensor und Messumformer realisieren, um die Messung an sich vorzunehmen, um Messwerte vor Ort ablesen zu können, Kalibrierungen durchzuführen und mit dem Prozessleitsystem zu kommunizieren. Diese Messumformer müssen installiert, auf den entsprechenden Sensor eingestellt, bedient und gewartet werden. Jeder dieser Schritte kann mit Fehlern und/oder Ausfällen behaftet sein. Ausserdem benötigen die Messumformer einen gewissen Platz, und nur ein Sensor oder eine relativ geringe Anzahl von Sensoren kann gleichzeitig an sie angeschlossen werden.

Nach der Lehre von DE102006020341A1 lassen sich Fehler bei der Zuordnung von Sensoren oben erwähnten Typs zur entsprechenden Messstelle z.B. nach Wartung oder Kalibrierung im ausgebauten Zustand vermeiden, indem jeder Sensorkopf und das mit dem Messumformer oder einem Leitsystem über eine RS-485 Datenleitung verbundene Gegenstück des Steckverbinders mit Funkeinheiten ausgerüstet sind, mittels denen Daten, welche den Sensor bzw. die Messstelle identifizieren und im Steckkopf des Sensors abgelegt bzw. über das Gegenstück beim Messumformer oder dem Prozessleitsystem abgefragt werden können, drahtlos an ein tragbares Prüfgerät ausgegeben werden, so dass der Bediener vor Ort der Messstelle eindeutig den dafür zugelassenen Sensor zuordnen kann. Zusätzlich lassen sich Mess-, Kalibrier- und Zustandsdaten des Sensors vor Ort über die Funkschnittstellen mit Hilfe des tragbaren Prüfgerätes abfragen und später ggf. mit denen der übergeordneten Einheit in einer Warte vergleichen. Diese Anzeige vor Ort wird insbesondere wichtig, wenn auf den Messumformer zukünftig verzichtet und die Sensoren direkt digital über die im Sensorkopfgegenstück des Steckverbinders integrierte RS485-Schnittstelle an das Prozessleitsystem angeschlossen werden sollen. Eine Signalübertragung zwischen Leitsystem und Messstelle mittels des einfachen, preiswerten, bewährten und deshalb weit verbreiteten 4...20 mA Standards zu realisieren, ist wiederum nur bei Verwendung eines entsprechenden Messumformers möglich, da die Sensoren, auf welche sich die Anmeldung DE102006020341A1 bezieht, über den Steckverbinder nur digital kommunizieren können. Sensoren direkt digital an das Prozessleitsystem anzuschliessen, erfordert letzteres mit entsprechenden Modulen auszurüsten, welche das proprietäre Kommunikationsprotokoll der Sensorköpfe unterstützen. Sensoren, welche nicht mit diesen Köpfen ausgestattet sind, sind dann entweder von der Verwendung im Prozess ausgeschlossen oder es müssen noch andere Kommunikationsstandards im Prozessleitsystem mit entsprechendem Aufwand und den mit der Uneinheitlichkeit des Systems verbundenen Nachteilen realisiert werden.

Die Verwendung von Handbediengeräten zur Vor-Ort-Anzeige und Bedienung von Feldgeräten ist insbesondere im Falle von Funknetzwerken mit Funkfeldgeräten bekannt. Die Schrift DE102006062476A1 beschreibt ein Funkfeldgerät der Automatisierungstechnik mit integrierter Energieversorgung, das aus einer Sensoreinheit zur Erfassung einer chemisch/physikalischen Messgröße und einer Funkeinheit besteht. Neben einem ersten Funkmodul zur drahtlosen Kommunikation mit einer Zentraleinheit ist die Funkeinheit mit einem zweiten Funkmodul zur drahtlosen Kommunikation mit einem Bediengerät in Form eines Handbediengerätes ausgerüstet. Das zweite Funkmodul und das Bediengerät eignen sich auch für die Bedienung von Feldgeräten vor Ort, die Daten über eine kabelgebundene Kommunikation an eine andere Einheit, einem Verteilermodul, übertragen. Um eine kabelgebundene Kommunikation zu realisieren, ist es jedoch wiederum notwendig, zwischen Sensoreinheit und Funkeinheit eine separate Anzeigeeinheit in Form eines herkömmlichen Messumformers einzubinden.

Nachteilig an bekannten Systemen ist, dass die Verwendung der sicheren drahtgebundenen analogen 4...20 mA -Verbindungstechnik allein oder parallel zu einer drahtgebundenen oder drahtlos realisierten digitalen Verbindung mit dem Prozessleitsystem zur Vor-Ort-Anzeige und -Bedienung an der Messstelle immer an einen herkömmlichen Messumformer gebunden ist.

### Aufgabe der Erfindung

Der Erfindung lag die Aufgabe zugrunde, ein System zur visuellen Überwachung und Bedienung von Prozesssensoren bereitzustellen, welches die Vorteile der robusten, drahtgebundenen analogen 4...20 mA -Verbindungstechnik: bewährt, sicher, hinsichtlich von Hard- und Software einfach einzubinden, standardmässig in Prozessleitsystemen implementiert und vielfach in aufgebauten Prozessanlagen bereits validiert, erhält. Parallel soll es eine digitale Kommunikation zwischen Feldgerät und Prozessleitsystem ermöglichen, dabei jedoch auf die Installation eines Messumformers herkömmlicher Form verzichten.

Trotzdem sollen eine einfache und schnelle Vor-Ort-Bedienung (Konfiguration und Parametrierung) sowie die Zustandsanalyse von Feldgeräten bzw. Prozesssensoren vorzugsweise mit einem Handbediengerät möglich sein. Gleichzeitig soll es mit dem System möglich sein, einzelne Sensoren auch ausserhalb der Messumgebung, an einem anderen Ort zu warten und zu kalibrieren.

Dementsprechend wird ein Prozesssensorsystem vorgeschlagen, das ein Elektronikmodul, einen mit dem Elektronikmodul trennbar verbundenen Prozesssensor und ein separates, mit dem Elektronikmodul trennbar verbundenes Bediengerät umfasst. Das Elektronikmodul umfasst dabei einen Mikroprozessor mit einer Speichereinheit, eine Mehrzahl von digitalen Schnittstellen, und ein Mittel zur Weiterleitung von analogen Signalen von dem Prozesssensor an ein Prozessleitsystem. Der Prozesssensor, welcher zur Bestimmung und Überwachung mindestens einer chemischen oder physikalischen Messgröße eines Messmediums ausgebildet ist, umfasst eine Sensoreinheit zur Erfassung der chemischen oder physikalischen Messgröße und Generierung von analogen Messdaten, und eine mit der Sensoreinheit untrennbar verbundene Elektronikeinheit. Die Elektronikeinheit umfasst einem Mittel zur Überwachung des Sensorzustandes, ein Mittel zur Digitalisierung der analogen Messdaten aus der Sensoreinheit, ein Mittel zur Weiterleitung der analogen und digitalisierten Daten, mindestens eine analoge Schnittstelle und mindestens eine digitale Schnittstelle zur Verbindung des Prozesssensors mit dem Prozessleitsystem sowie eine galvanische Trennung zwischen dem Messmedium und den Schnittstellen.

Der Prozesssensor umfasst ferner bevorzugt ein Mittel zur selbstständigen Überprüfung sowohl der Funktion und des Zustands der Elektronikeinheit als auch der Funktion und des Zustands des Prozesssensors.

Die Mehrzahl der digitalen Schnittstellen des Elektronikmoduls kann eine erste digitale Schnittstelle zur drahtgebundenen Kommunikation zwischen Elektronikmodul und Prozesssensor, und eine zweite digitale Schnittstelle zur drahtgebundenen Kommunikation zwischen Elektronikmodul und dem Prozessleitsystem umfassen.

Die Mehrzahl der digitalen Schnittstellen des Elektronikmoduls kann ferner eine dritte digitale Schnittstelle ausgebildet als Funkschnittstelle mit Sende- und Empfangseinheit, und/oder eine vierte digitale Schnittstelle zur Kommunikation zwischen dem Elektronikmodul und dem Bediengerät umfassen.

Das Elektronikmodul weist bevorzugt einen ersten mehrpoligen Steckverbinder zur Verbindung mit dem Prozesssensor sowie einen zweiten mehrpoligen Steckverbinder zur Verbindung mit einem Prozessleitsystem auf.

Das Elektronikmodul kann Signalmittel aufweisen. Die Signalmittel können optische oder akustische Signale aussenden.

Die Sensorelektronikeinheit des Prozesssensors umfasst bevorzugt mindestens ein Mittel aus der Gruppe gebildet aus: einem Mittel zur Verstärkung der analogen Messdaten der Sensoreinheit, einem Mittel zur Verbindung mit einer externen Stromversorgung, und einer Stromversorgungsautomatik, die derart ausgebildet ist, zwischen einer Stromversorgung über die mindestens eine analoge Schnittstelle oder dem Mittel zur Verbindung mit einer externen Stromversorgung automatisch zu wählen.

Die Sensorelektronikeinheit kann einen ersten Funktionsblock und einen zweiten Funktionsblock aufweisen, wobei der erste Funktionsblock das Mittel zur Digitalisierung der Messdaten und das Mittel zur Verstärkung der Messdaten umfasst, und der zweite Funktionsblock das Mittel zur Überwachung des Sensorzustandes, das Mittel zur Weiterleitung der Messdaten und das Mittel zur Speicherung umfasst.

Die analogen Schnittstellen können 4-20 mA Schnittstellen sein und/oder die digitalen Schnittstellen können RS-485 Schnittstellen sein.

Das Bediengerät ist bevorzugt drahtgebunden oder drahtlos mit dem Elektronikmodul verbunden ist. Es kann zudem ein Display aufweisen.

Das Bediengerät ist bevorzugt zur gleichzeitigen Verbindung mit mehreren Prozesssensoren und Elektronikmodulen adaptiert.

Das Prozesssensorsystem umfasst bevorzugt ferner eine Dockingstation zur Aufnahme eines Bediengerätes und zu dessen Stromversorgung, wobei die Dockingstation eine Schnittstelle aufweist, über welche das Bediengerät mit einem an die Dockingstation drahtgebundenen Prozesssensor in eine digitale Kommunikation bringbar ist.

Die Stromversorgung des Bediengerätes kann über eine mit der Dockingstation integral ausgebildete Stromquelle erfolgen.

Die Dockingstation kann ferner einen USB Anschluss zur Anbindung eines externen Speichermediums aufweisen.

### Kurze Beschreibung der Zeichnungen

Die Erfindung wird im Folgenden anhand einiger Ausführungsbeispiele unter Bezug auf die beigefügten Zeichnungen exemplarisch beschrieben werden.

Es zeigen:
- Fig. 1: eine schematische Darstellung des Elektronikmoduls mit seinen Bestandteilen;
- Fig. 2: eine schematische Darstellung des Bediengerätes mit Display und Bedienelementen;
- Fig. 3: eine schematische Darstellung der Prozessintegration von intelligenten Sensoren und der Module Elektronikeinheit und Bediengerät für den Fall von paralleler digitaler und analoger Anbindung an das Prozessleitsystem und drahtlosem Datenaustausch zwischen Bediengerät und intelligentem Sensor über die Elektronikeinheit;
- Fig. 4: eine schematische Darstellung von intelligenten Sensoren und der Module Elektronikeinheit und Bediengerät für den Fall von ausschliesslich digitaler Anbindung an das Prozessleitsystem und drahtlosem Datenaustausch zwischen Bediengerät und intelligentem Sensor über die Elektronikeinheit;
- Fig. 5: eine schematische Darstellung der Prozessintegration von intelligenten Sensoren und der Module Elektronikeinheit und Bediengerät für den Fall von ausschliesslich analoger Anbindung an das Prozessleitsystem und drahtlosem Datenaustausch zwischen Bediengerät und intelligentem Sensor über die Elektronikeinheit;
- Fig. 6: eine schematische Darstellung eines singulären Messaufbaus bestehend aus Energieversorgung, Elektronikmodul und Bediengerät mit drahtloser Datenübertragung zwischen Sensor und Bediengerät über das Elektronikmodul;
- Fig. 7: eine schematische Darstellung der Prozessintegration von intelligenten Sensoren und des Bediengerätes für den Fall von paralleler digitaler und analoger Anbindung an das Prozessleitsystem und direktem drahtgebundenem Datenaustausch zwischen Bediengerät und intelligenten Sensoren;
- Fig. 8: eine schematische Darstellung des Anschlusses des Handbediengerätes und eines intelligenten Sensors an die Dockingstation mit Schnittstelle zum einem externen Speichermedium;
- Fig. 9: die schematische Darstellung eines erfindungsgemässen Prozesssensorsystems zur Bestimmung und Überwachung des pH- Wertes,
- Fig. 10: zeigt die schematische Darstellung eines erfindungsgemässen Prozesssensorsystems zur Bestimmung und Überwachung der Leitfähigkeit,
- Fig. 11: zeigt die schematische Darstellung der Elektronikeinheit eines erfindungsgemässen Messgerätes zum Einsatz mit verschiedenen Sensoren.

### Detaillierte Beschreibung der Zeichnungen

Die Aufgabe wird mit einem erfindungsgemäßen System gelöst, das eine modulare Vorrichtung zur Überwachung und Bedienung_von intelligenten Prozesssensoren darstellt. Es umfasst eine neue Elektronikeinheit (Elektronikmodul), ein spezielles Bediengerät sowie intelligente Prozesssensoren. Die Elektronikeinheit ist trennbar in die Verbindungsleitung zwischen intelligentem Prozesssensor und einem übergeordneten System eingebracht und kann zum einen von einem intelligenten Prozesssensor digitalisierte Daten und Informationen empfangen sowie diese über eine digitale Schnittstelle drahtgebunden und/oder drahtlos an das Bediengerät der modularen Vorrichtung weiterleiten. Eine mögliche Dockingstation für das Bediengerät in Form eines Handbediengerätes dient dem Zweck, dieses aufzuladen bzw. durch die Integration weiterer Mittel in diese Dockingstation kann durch den Anschluss eines intelligenten Prozesssensors an letztere zusätzlich ein eigenständiges Messgerät bereitgestellt werden, welches die Kalibrierung und Überprüfung der intelligenten Prozesssensoren gestattet.

Diese intelligenten Prozesssensoren realisieren nicht nur die Gewinnung und Digitalisierung von Messdaten sowie die galvanische Trennung zum Messgut im Sensor, sondern besitzen zugleich mindestens eine digitale, vorzugsweise als RS-485 ausgestaltete Schnittstelle und mindestens eine analoge Schnittstelle vorzugsweise als 4...20 mA Schnittstelle ausgelegt. Diese Schnittstellen ermöglichen den Sensoren, direkt drahtgebunden mit dem Prozessleitsystem zu kommunizieren, ohne herkömmliche Messumformer zu benutzen. Für die digitale Kommunikation mit dem Prozessleitsystem wird in einer bevorzugten Ausführung das offene, standardisierte Protokoll Modbus benutzt. Die Energieversorgung dieser Sensoren erfolgt wahlweise über eine analoge, vorzugsweise als 4...20 mA ausgelegte Schnittstelle oder über eine separate Speisung.

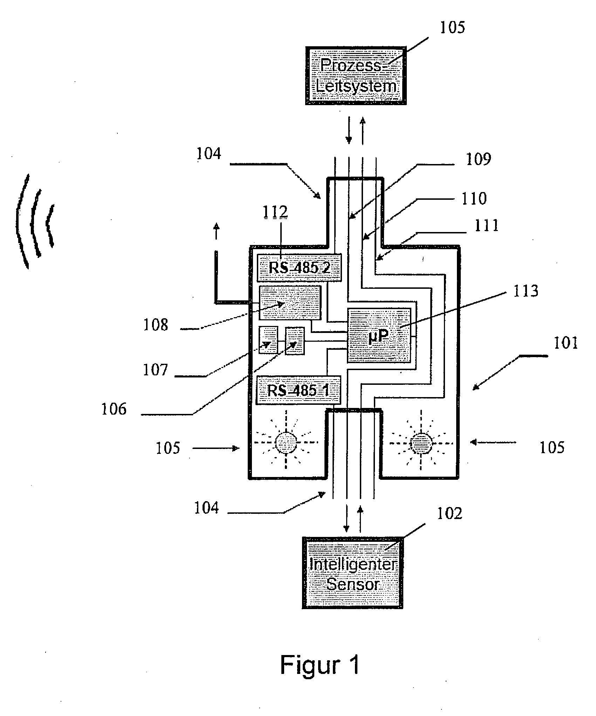

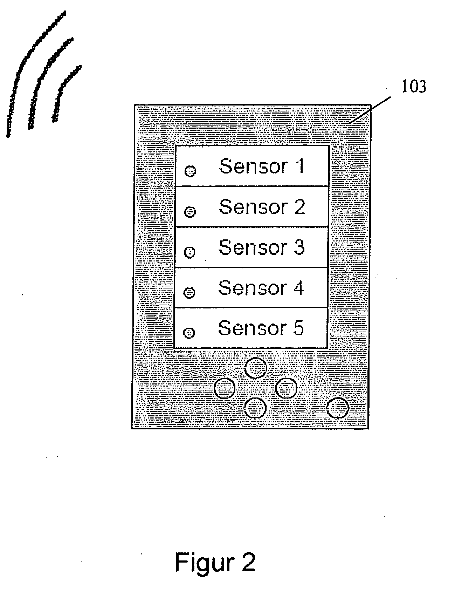

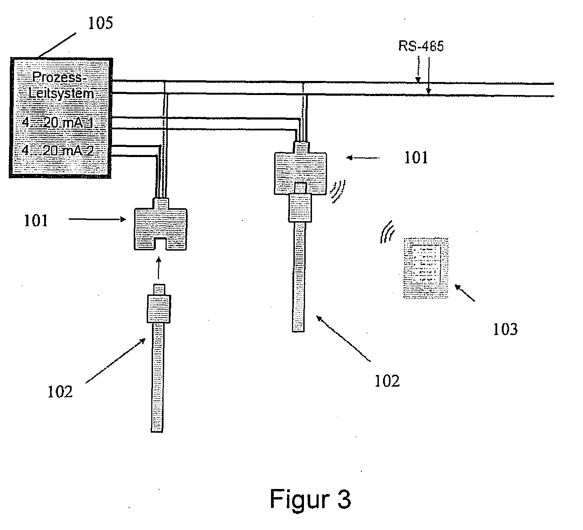

Figur 1 zeigt eine schematische Darstellung des Elektronikmoduls 101 mit seinen Bestandteilen. Um eine Visualisierung der Messdaten und des Sensorzustandes, aber auch verschiedene Bedienfunktionen, z.B. das Auslösen eines Kalibriervorganges, vor Ort zu ermöglichen, wird in die Verbindungsleitung zwischen intelligentem Sensor 102 und übergeordnetem Prozessleitsystem 105 ein erfindungsgemässes Elektronikmodul 101, welches mit einem Mikroprozessor 113 und diversen digitalen Schnittstellen 108, 112 ausgerüstet ist, trennbar, über lösbare Steckverbinder 104 eingebunden. Zwei der Schnittstellen 108, 112 dienen der unabhängigen drahtgebundenen Kommunikation zwischen dem Elektronikmodul 101 und dem Prozesssensor oder vereinfacht Sensor 102, bzw. zwischen dem Elektronikmodul 101 und dem übergeordneten Prozessleitsystem 105. Weitere digitale Schnittstellen 108, 112 können als Funkschnittstelle mit Sendeeinheit 106 und Empfangseinheit 107 oder auch als drahtgebundene Schnittstelle ausgelegt werden und dienen zur Kommunikation zwischen dem Elektronikmodul 101 und dem erfindungsgemässen Bediengerät 103, bevorzugt in Form eines Handbediengeräts, wie in Fig. 2 dargestellt. Die trennbare Einbindung der Elektronikeinheit 101 erfolgt vorteilhaft durch direkte Montage auf den Sensorkopf, was aufgrund seiner geringen Grösse ohne zusätzlichen Platzbedarf fast überall möglich sein sollte (siehe Figur 3).

Das erfindungsgemässe Elektronikmodul 101 übernimmt die Funktion eines Routers für die digitale drahtgebundene Kommunikation zwischen Sensor 102 und Prozessleitsystem 105, sowie für die digitale drahtlose oder drahtgebundene Kommunikation zwischen Sensor 102 und Bediengerät 103. Die digitale Kommunikation zwischen Sensor 102 und jeweiligem Endgerät erfolgt mit Hilfe eines offenen Kommunikations-Protokolls, beispielsweise des Modbus- Protokolls. Das Elektronikmodul 101 ist mit der notwendigen Intelligenz versehen, installationsbedingte Konfigurationen, beispielsweise die im Prozess zur Identifikation verwendete Geräteadresse, die digitale Datenübertragungsrate, den Sensortyp, oder die Bezeichnung der Messstelle, bzw. des Sensors automatisch zu erkennen und sich selbst entsprechend zu konfigurieren. Beispielsweise übernimmt das Elektronikmodul 101 im Falle der Verwendung einer auf dem Modbus- Protokoll basierenden Kommunikation zwischen Sensor 102 und Prozessleitsystem 105 gegenüber dem Prozessleitsystem 105 die Funktion des Slave und gegenüber dem Sensor 102 die Funktion des Masters.

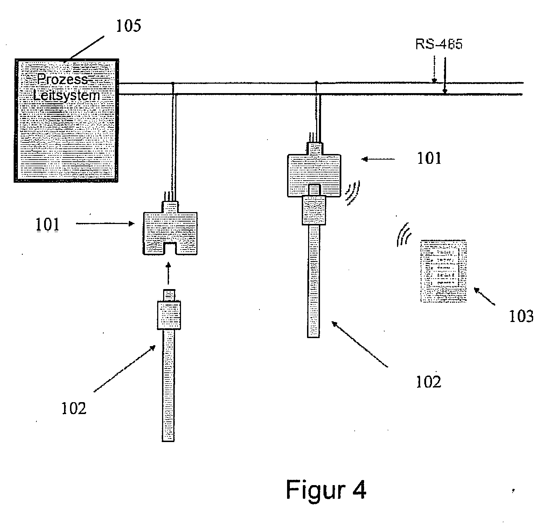

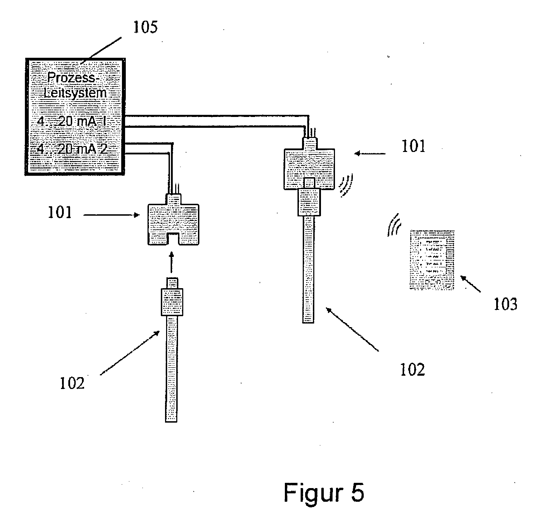

Ausserdem leitet das erfindungsgemässe Elektronikmodul 101, falls dieser Kommunikationsweg gleichzeitig realisiert ist, die vom Sensor 102 regulierten analogen Signale, vorzugsweise aber nicht beschränkend 4...20 mA Signale oder andere sensorspezifische analoge Messsignale, parallel an das Prozessleitsystem 105 weiter (Fig. 3). Ist nur der digitale oder nur der analoge Kommunikationsweg zwischen Sensor 102 und Prozessleitsystem 105 realisiert, so fungiert das Elektronikmodul 101 in Verbindung mit dem erfindungsgemässen Bediengerät 103 ebenfalls bestimmungsgemäss (Fig. 4 bzw. Fig. 5).

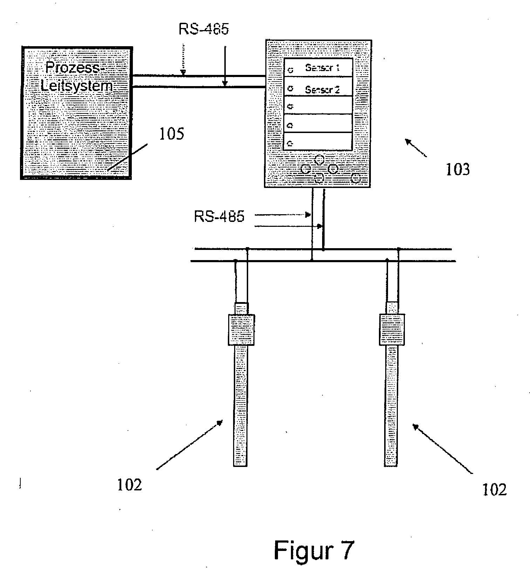

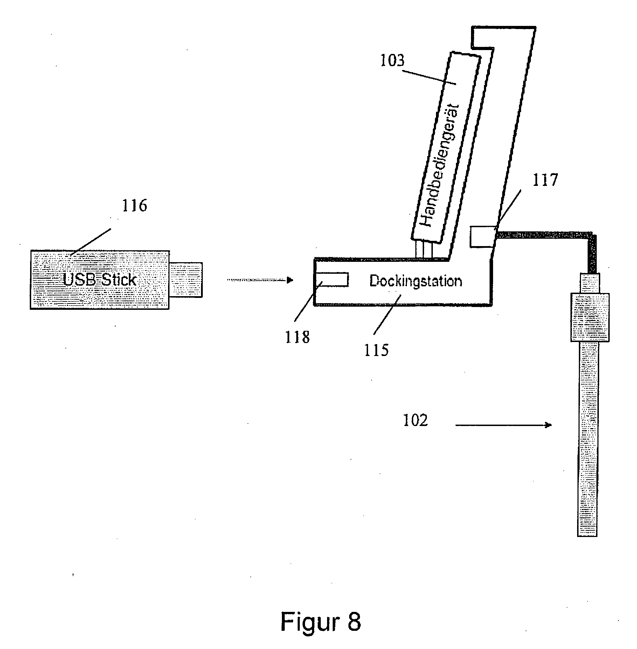

Das erfindungsgemässe Bediengerät 103 der Fig. 2 kann wie in Fig. 3, 4, 5 oder 6 gezeigt als drahtloses Handbediengerät oder als drahtgebundenes Gerät der Fig. 7 in einer Prozessinstallation, wobei es in dieser Ausführungsform direkt mit den Sensoren 102 verbunden ist und die Funktion des Routers zwischen einem oder mehreren Sensoren 102 und dem Prozessleitsystem 105, wie sie oben für das Elektronikmodul 101 beschrieben ist, übernimmt und entsprechend ausgestattet ist, oder als Desktopgerät, oder wiederum als Handbediengerät in Verbindung mit einer erfindungsgemässen Dockingstation 115, wie in Fig. 8 gezeigt, für den Laboreinsatz bzw. für Wartung und Kalibrierung ausserhalb der Messumgebung, beispielsweise in einer Werkstatt, realisiert werden. Dazu ist es je nach Einsatzgebiet zur Kommunikation mit einem oder mehreren intelligenten Prozesssensoren 102 über ein oder mehrere Elektronikmodule 101 mit einer drahtlosen und/oder mit einer drahtgebundenen digitalen Schnittstelle zur direkten Kommunikation mit den intelligenten Prozesssensoren 102 versehen (Figur 3 bzw. 7). Des Weiteren kann das Handbediengerät 103 über Schnittstellen 117 der Dockingstation 115 mit einem an diese direkt angeschlossenen intelligenten Sensor 102 kommunizieren, wie in Fig. 8 gezeigt.

Das Bediengerät 103 der Fig. 2 ist weiterhin mit einer eigenen Stromversorgung, im drahtlosen Fall mittels Akkumulatoren, sowie mit den für seine Funktion notwendigen Baugruppen, wie einem Mikroprozessor, Bedienelementen, einem Display zur Visualisierung ausgestattet.

Sowohl im Bediengerät 103 als auch im Elektronikmodul 101 müssen zu deren bestimmungsgemässen Funktion keine sensor- oder messstellenspezifischen Daten gespeichert sein. Die dafür notwendigen Daten sind im Sensor abgelegt. Alle Informationen die vom Prozessleitsystem 105 oder dem Bediengerät 103 über das Elektronikmodul 101 oder die Dockingstation 115 abgerufen werden, werden aus dem Sensor 102 ausgelesen. Dies hat zum Vorteil, dass mehrere und verschiedenartige zur drahtlosen Kommunikation mit Elektronikmodulen 101 versehene, oder direkt drahtgebunden an das Bediengerät 103 angeschlossene intelligente Sensoren 102, z.B. Sensoren für den pH-Wert, die Leitfähigkeit, Sauerstoff, optische oder elektrochemische Sensoren mit ein und demselben Bediengerät ausgelesen, bedient und ggf. parametrisiert werden können. Dazu dient eine intuitiv verständliche graphische Benutzeroberfläche, welche es dem Nutzer erlaubt, durch die verschiedenen Ebenen des Funktionsmenüs für den jeweiligen Sensor 102 zu navigieren. Des gleichen kann ein und dasselbe erfindungsgemässe Elektronikmodul mit verschiedenen Sensoren betrieben werden. Weder das Bediengerät noch das Elektronikmodul 101 brauchen vorgängig konfigurierte oder abgelegte Information über die zu bedienenden in der Prozessumgebung installierten Sensoren 102.

Die Reichweite der drahtlosen digitalen Kommunikation zwischen Elektronikmodul 101 und Bediengerät 103 ist ausreichend gross ausgelegt, vorzugsweise grösser als 50m, so dass auch schwer zugängliche Messstellen oder Sensoren 102 in grossen Prozessinstallationen problemlos erreicht werden können.

Das erfindungsgemässe Elektronikmodul 101 ist mit der notwendigen Funktionalität ausgerüstet, so dass der Datenabruf aus dem Sensor 102 durch das Bediengerät 103 und/oder durch das Prozessleitsystem 105 beziehungsweise Anweisungen, die von diesen an den Sensor 102 gesendet werden, korrekt abgearbeitet werden. Das Elektronikmodul 1ß1 verhält sich gegenüber dem Prozessleitsystem 105 transparent, d.h. es wird von diesem explizit nicht als solches wahrgenommen und die entsprechenden relevanten Kommunikationsleitungen 109 (VCC), 110 (analog 1, bevorzugt 4-20mA) und 111 (analog 2, bevorzugt 4-20mA) werden zu keinem Zeitpunkt unterbrochen. Letzteres würde den Sensor 102 betreffend, begründet durch die Konzeption vieler Kommunikationsprotokolle, beispielsweise Modbus, in undefinierten Situationen resultieren. Das Elektronikmodul 101 betreibt jedoch selbstständig die ständige unaufgeforderte Abfrage relevanter Daten aus dem Sensor 102, wie z.B. Messdaten oder Zustandsdaten des Sensors 102, und legt diese in einem temporären Speicher ab. Dieses Zwischenspeichern vereinfacht die Kommunikation zwischen Sensor 102 und Prozessleitsystem 105 und/oder dem Bediengerät 103 und erhöht ihre Geschwindigkeit.

Das erfindungsgemässe Bediengerät 103 ist so konstruiert, dass es drahtlose Kommunikationsverbindungen zu mehreren erfindungsgemässen Elektronikmodulen 101 oder drahtgebundene Kommunikationsverbindungen zu mehreren und verschiedenen intelligenten Prozesssensoren 102 direkt aufrechterhalten kann. Die im Empfangsbereich des Bediengerätes 103 befindlichen bzw. angeschlossenen Sensoren 102 werden ohne Aktivitäten des Benutzers automatisch und periodisch vom Bediengerät 103 abgefragt und die aktualisierten Daten auf dem Display des Gerätes 103 visualisiert. Dadurch erhält der Anwender einen schnellen Überblick über die in seinem interessierenden Prozess installierten Messstellen. Es ist ebenso möglich, Mess- und Sensordaten auf dem Bediengerät 103 abzuspeichern.

Die Identifizierung des Sensors 102 durch den Benutzer, mit dem das Bediengerät 103 gerade aktiv kommuniziert, ist, wenn sich mehrere Sensoren 102 in der näheren Umgebung befinden, unerlässlich. Dazu ist das Elektronikmodul 101 mit Signalmitteln 105, z.B. optischen oder akustischen, vorzugsweise aber mit Leuchtdioden ausgestattet, die die vom Benutzer aktivierte Verbindung mit dem Bediengerät 103 signalisieren. Bei Verwendung von beispielsweise verschiedenfarbigen Leuchtdioden können durch die unterschiedlichen Farben diverse Zustände des Sensors 102 angezeigt werden. Dies kann aber auch durch verschiedenartiges Blinkverhalten erfolgen. Die Zustände des Sensors 102 werden ebenfalls durch eine visuelle Anzeige auf dem Handbediengerät 103 angezeigt. Weiter kann eine Prozessmessstelle mit einem im Sensor 102 abgelegten Namen bezeichnet werden, welcher im Auswahlmenü des Bediengerätes 103 für die zur Kommunikation verfügbaren Sensoren 102 als Information erscheint.

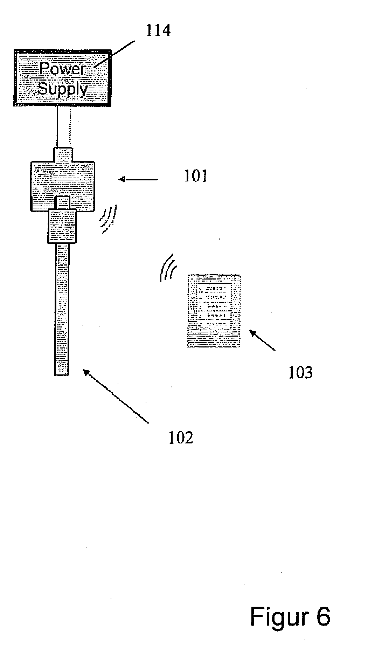

Wünschenswert ist, die intelligenten Prozesssensoren 102 auch an einem anderen Ort als der Messstelle z.B. zu Wartungs- und Kalibrierzwecken betreiben zu können, ohne auf ein anderes Bediengerät 103 zurückgreifen zu müssen. Dies kann zum einen erfolgen, indem das erfindungsgemässe Elektronikmodul 101 in Verbindung mit einem Sensor 102 belassen wird. Stellt man eine entsprechende Stromversorgung 114 wie in Fig. 6 gezeigt bereit, bildet der intelligente Prozesssensor 102 in Verbindung mit einem Elektronikmodul 101 und einem Handbediengerät 103 ein unabhängiges Messsystem mit dem Daten aus dem Sensor 102 ausgelesen oder in den Speicher des Sensors 102 abgelegt werden können.

Eine erfindungsgemässe Dockingstation 115 für das Handbediengerät 103 ist mit einer Ladestation zum Aufladen der Akkumulatoren des Handbediengeräts 103 versehen. Solche Vorrichtungen sind hinreichend bekannt. Beim Andocken können jedoch auch weitere Kontakte des Handbediengerätes 103 mit der Dockingstation 115 verbunden werden, die eine digitale Kommunikation des Handbediengerätes 103 mit einem ebenfalls an die Dockingstation 115 über einen entsprechenden Eingang 117 drahtgebunden angeschlossenen intelligenten Prozesssensor 102 ermöglichen. Somit können ebenfalls Daten aus dem Sensor 102 ausgelesen und im Bediengerät 103 gespeichert oder aus dem Speicher des Bediengerätes 103 gelesen und in den Speicher des Sensors 102 übertragen werden. Die Stromversorgung des Sensors 102 erfolgt dabei über die Stromversorgung der Dockingstation 115 oder über eine separate Stromversorgung.

Des Weiteren können im Bediengerät 103 abgelegte Daten des Sensors 102 über einen weiteren digitalen Anschluss der Dockingstation (z.B. USB 118) auf ein externes Speichermedium (z.B. USB-Stick 116) oder einen Computer z.B. zu Archivierungszwecken geschrieben werden. Umgekehrt können auf diesem Weg auch Daten von externen Speichermedien oder Computer über das Bediengerät 103 auf den Sensor 102 transferiert werden. So können z.B. auch neue Software-Versionen auf das Handbediengerät 103 oder auf den drahtgebunden angeschlossenen intelligenten Prozesssensor 102 überspielt werden.

Die entsprechenden Befehle werden dabei vom Benutzer über das Handbediengerät 103 ausgelöst. Dockingstation 115, Handbediengerät 103 und intelligenter Prozesssensor 102 bilden somit ein in Fig. 8 gezeigtes unabhängiges Messsystem mit optional angeschlossenem externem Datenspeicher 116.

Die Funktionen und die graphische Benutzeroberfläche des Bediengerätes 103 können zur drahtlosen Bedienung und Überwachung von intelligenten Sensoren 102 ebenfalls von einem Computer, welcher mit einer entsprechenden Applikationssoftware und einer entsprechenden Sende- und Empfangseinheit zur digitalen Kommunikation mit den jeweiligen Elektronikmodulen 101 ausgerüstet ist, übernommen werden. Durch die Verwendung der analogen graphischen Benutzeroberfläche auf dem Handbediengerät 103, einem fest installierten Gerät oder einem Computer bleibt die Benutzung des modularen Systems einheitlich und einfach.

Fig. 3 zeigt eine schematische Darstellung der Prozessintegration von intelligenten Sensoren 102 und der Module Elektronikeinheit 101 und Bediengerät 103 für den Fall von paralleler digitaler und analoger Anbindung an das Prozessleitsystem und drahtlosem Datenaustausch zwischen Bediengerät 103 und intelligentem Sensor 102 über die Elektronikeinheit 101. Die Energieversorgung der einzelnen Komponenten ist nicht dargestellt. Ein erste Sensor 102 ist über ein erstes Elektronikmodul 101 und sowohl analoge Schnittstellen und Datenleitungen (beispielhaft als 4...20mA Schnittstellen/Leitungen gezeigt) als aus digitale Schnittstellen und Datenleitungen (beispielhaft als Rs-485 Schnittstellen/Leitungen gezeigt) mit dem Prozessleitsystem 105 verbunden. Ein zweiter Sensor 102 ist entsprechend über ein zweites Elektronikmodul 101 und digitale und analoge Leitungen mit dem Prozessleitsystem 105 verbunden. Das zweite Elektronikmodul 101 kommuniziert in Fig. 3 kabellos mit dem Handbediengerät 103, an dem beide Sensoren 102 angemeldet sind.

Fig. 4 zeigt die entsprechende schematische Darstellung der Prozessintegration von intelligenten Sensoren und der Module Elektronikeinheit und Bediengerät für den Fall von ausschliesslich digitaler Anbindung (beispielhaft RS-485) an das Prozessleitsystem 105 und drahtlosem Datenaustausch zwischen Bediengerät 103 und intelligentem Sensor 102 über die Elektronikeinheit 101. Die Energieversorgung der einzelnen Komponenten ist wiederum nicht dargestellt.

Fig. 5 zeigt nun die schematische Darstellung der Prozessintegration von intelligenten Sensoren und der Module Elektronikeinheit und Bediengerät für den Fall von ausschliesslich analoger Anbindung (beispielhaft 4...20mA) an das Prozessleitsystem 105 und drahtlosem Datenaustausch zwischen Bediengerät 103 und intelligentem Sensor 102 über die Elektronikeinheit 101. Die Energieversorgung der einzelnen Komponenten ist auch hier nicht dargestellt.

Fig. 6 zeigt in einem Ausführungsbeispiel eine schematische Darstellung eines singulären Messaufbaus bestehend aus Energieversorgung 114, Elektronikmodul 101 und Bediengerät 103 mit drahtloser Datenübertragung zwischen Sensor 102 und Bediengerät 103 über das Elektronikmodul 101.

Fig. 7 zeigt eine schematische Darstellung der Prozessintegration von intelligenten Sensoren 102 und des Bediengerätes 103 für den Fall von paralleler digitaler und analoger Anbindung an das Prozessleitsystem 105 und direktem drahtgebundenem Datenaustausch zwischen Bediengerät 103 und intelligenten Sensoren 102. Die Energieversorgung der einzelnen Komponenten ist nicht dargestellt.

Es sind somit verschieden Konfigurationen von analoger und digitaler, lediglich analoger, lediglich digitaler sowie kabelloser und kabelgebundener Kommunikation möglich, die die Einsatzmöglichkeiten des Messsystems deutlich erhöhen.

Fig. 8 zeigt in schematische Darstellung zudem den Anschluss des Handbediengerätes 103 und eines intelligenten Sensors 102 an die Dockingstation 114 mit Schnittstelle 118 zum einem externen Speichemedium 116 (USB-Stick). Die Energieversorgung der einzelnen Komponenten ist nicht dargestellt.

Im Folgenden wird nun noch der intelligente Prozesssensor oder schlicht Sensor 102 näher erläutert werden. Der Sensor 102 dient dabei als eine Vorrichtung zur Bestimmung und Überwachung mindestens einer prozessrelevanten chemischen oder physikalischen Messgrösse und umfasst eine Elektronikeinheit 3 und eine beliebige Sensoreinheit 22. Die Elektronikeinheit 3 ist dabei fest, also untrennbar mit der Sensoreinheit 22 verbunden. Die Elektronikeinheit 3 ist derart ausgestaltet, dass sie Mittel aufweist, welche Funktion und Zustand sowohl der Sensoreinheit 22 als auch der eigenen Elemente selbständig überprüfen können.

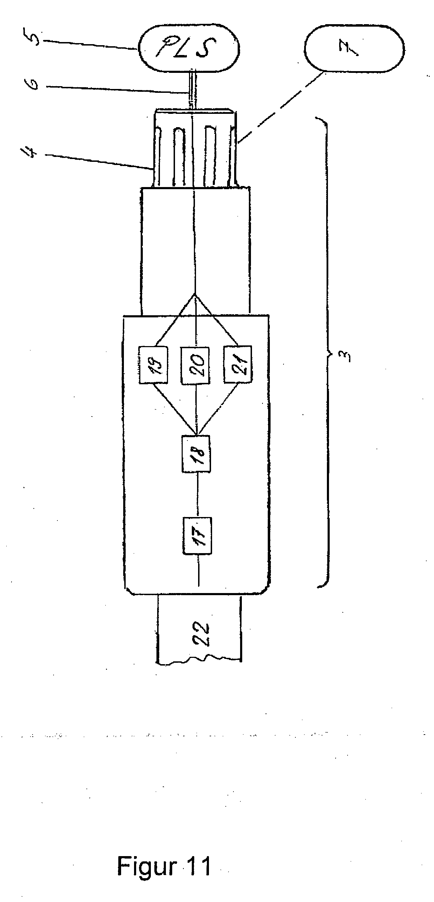

In einer bevorzugten Ausführung weist die Elektronikeinheit 3 zwei Funktionsblöcke 17, 18 auf. Vorteilhafterweise ist ein Funktionsblock 17 z.B. so gestaltet, dass er die Generierung von Signalen, die Aufnahme, Verstärkung und Digitalisierung der Messdaten übernehmen kann. Der weitere Funktionsblock 18 übernimmt dann z.B. die Verarbeitung, Weiterleitung sowie Überwachung des Sensorzustandes und die Speicherung sensorrelevanter Daten. Die Elektronikeinheit 3 verfügt weiterhin über Schnittstellen 19, 20 zur sowohl digitalen als auch analogen Kommunikation mit einem Prozessleitsystem 5, sowie über eine galvanische Trennung zwischen Messmedium und den Schnittstellen. Eine gegebenenfalls integrierte Stromversorgungsautomatik 21 gestattet die Quelle der Energieversorgung automatisch zu wählen. Aufbau und Funktionsweise einer allgemeinen Vorrichtung mit einer bevorzugten Elektronikeinheit 3 sind in Fig. 11 dargestellt.

Die Elektronikeinheit 3, die die Funktionen des Transmitters übernimmt, ist untrennbar mit der individuellen Sensoreinheit 22 verbunden. Die Elektronikeinheit 3 mit allen Funktionalitäten eines Transmitters verschmilzt somit mit der eigentlichen Sensorkomponente 22 zum erfindungsgemässen Messgerät. D.h. man kann das Messgerät auch als intelligenten Sensor 102 bezeichnen. Das erfindungsgemässe Messgerät erfüllt die dazu erforderlichen Anforderungen hinsichtlich des Platz- und Energiebedarfs als auch hinsichtlich der Temperaturstabilität, da Prozesssensoren u. a. bei SIP und CIP- Prozessen hohen Temperaturen ausgesetzt sind. Das erfindungsgemässe Messgerät ist auch bei Temperaturen bis zu typischerweise 130 - 150°C temperaturstabil und funktionstüchtig, wodurch sein Einsatz auch bei höheren Prozesstemperaturen ermöglicht wird. Die Kosten für einen Transmitter selbst als auch für seine sensorgerechte Konfiguration und Wartung können gespart werden. Da die Konfiguration werksseitig erfolgt, ist das erfindungsgemässe Messgerät sofort und ohne vorherige Konfigurationen einsatzbereit. Gleichzeitig sind die für die Selbstüberwachung der Sensoren 22 und der Elektronikeinheit 3 erforderlichen Funktionalitäten hard- und softwaremässig implementiert. Verwechslungen beim Anschluss von Sensoreinheiten 22 an den Transmitter sind nicht mehr möglich. Das Messgerät 102 ist in der Lage dem Prozessleitsystem 5 direkt nicht nur die Art seines Signals, sondern auch dessen Qualität, sowie Fehler und Warnungen zu signalisieren, ohne dass dazu entsprechende Einstellungen an einem externen Transmitter notwendig sind.

Des Weiteren ist es möglich, Sensoreinheiten 22 mit individuellen Spezifikationen zu betreiben, da jeder Sensoreinheit 22 die auf ihn zugeschnittene Elektronikeinheit 3 mit der entsprechenden Firmware untrennbar zugeordnet ist. Dies ist insbesondere zur Erweiterung der Selbst-Überwachungsfunktionen über das übliche Mass hinaus von Vorteil.

Die niederohmige und damit wenig störungsanfällige Weitergabe von Signalen hochohmiger Sensoreinheiten 22 (z.B. ionenselektiver potentiometrischer Sensoren, wie pH- Sensoren), oder von Sensoreinheiten 22, auf deren Messverhalten die Kapazität und der Widerstand von Verbindungskabeln einen Einfluss hat, wie z.B. bei kontaktierenden Leitfähigkeitssensoren, wird gewahrt. Das erfindungsgemässe Messgerät kann sowohl digital, beispielsweise über eine serielle RS-485-Schnittstelle als auch analog, beispielsweise über eine 4-20 mA Schnittstelle an das Prozessleitsystem 5 angebunden sein, ohne zusätzliche Mittel dafür zu benötigen. Die entsprechenden Schnittstellen 19, 20 können simultan betrieben werden. Der erfindungsgemässe Prozesssensor 102 ist damit an moderne, digital kommunizierende Umgebungen angepasst, kann aber auch analog, beispielsweise über die weit verbreitete 4-20 mA Schnittstelle an Prozessleitsysteme 5 angebunden werden. Eine digitale Kommunikation ist nicht zwingend erforderlich.

Über die digitale Kommunikation ist es möglich, bestimmte Konfigurationen und Einstellungen, entsprechend benutzerabhängiger Zugriffsrechte auszulesen und zu verändern.

Vorzugsweise wird die digitale Kommunikation mit der übergeordneten Einheit mit einem standardisierten Protokoll (z.B. Modbus, Profibus o. ä.), welches für alle Sensor-Typen identisch gestaltet ist, realisiert. Dabei werden die sensor- und prozessrelevanten Daten in einer generischen Datenstruktur im Messgerät abgelegt und zur Verfügung gestellt. D.h. die übergeordnete Einheit kann allein mit der Realisierung des Kommunikationsprotokolls und der Datenstruktur ohne weitere Konfiguration alle relevanten Daten, die das erfindungsgemässe Messgerät im Detail beschreiben, z.B. Identität des Messgerätes, Art, Anzahl und Bezeichnung der Messgrössen, zulässige Einheiten, zulässige Messbereiche, zulässige Umgebungsbedingungen, Art, Anzahl und Bezeichnung der Parameter, Art, Anzahl und Bezeichnung der Schnittstellen, Art, Anzahl und Bezeichnung der Kalibriermodi etc. neben den eigentlichen Haupt- und Nebenmessgrössen und Betriebszuständen abrufen. Damit können erfindungsgemässe Prozesssensoren 102 unterschiedlichster Natur an eine übergeordnete Einheit angeschlossen werden, ohne dass die übergeordnete Einheit jemals für diese Messgeräte vorbereitet oder konfiguriert wurde.

In einer Ausführungsform wählt der erfindungsgemässe Prozesssensor 102 die Quelle der Energieversorgung erfindungsgemäss automatisch, je nach dem ob die Kommunikation mit dem Prozessleitsystem analog oder digital erfolgen soll. Im Falle einer rein analogen Kommunikation über eine 4-20 mA Schnittstelle mit dem Prozessleitsystem 5 erfolgt die Energieversorgung über diese Schnittstelle. Das Messgerät bildet eine Stromsenke (two wire loop powered). Im Fall einer digitalen Kommunikation kann eine externe Stromversorgung 7 erforderlich sein. Ist eine externe Stromversorgung 7 angeschlossen wird automatisch auf diese zurückgegriffen. Dies wird durch eine Stromversorgungsautomatik 21 in der Elektronikeinheit 3 verwirklicht. In einer anderen Ausführungsform der Erfindung mit noch geringerem Energiebedarf erfolgt die Stromversorgung ausschliesslich über die 4-20 mA Schnittstelle 19.

Optional kann das Messgerät auch schaltbare Ein- bzw. Ausgänge (z.B. digitale I/O) aufweisen, über die beispielsweise Alarmzustände direkt an eine übergeordnete Einheit und/oder direkt an einen Alarmmelder übergeben werden können, eine Regelfunktion realisiert werden kann, oder es können Vorgänge im Messgerät, beispielsweise eine Kalibrierung, ausgelöst werden.

Im Nachhinein wird anhand von Ausführungsbeispielen die erfindungsgemässe Vorrichtung zur Bestimmung und Überwachung einer prozessrelevanten Messgrösse, im folgenden Messgerät genannt, beschrieben, ohne sich auf diese konkreten Anwendungsbeispiele und die angeführten Sensoren zu begrenzen.

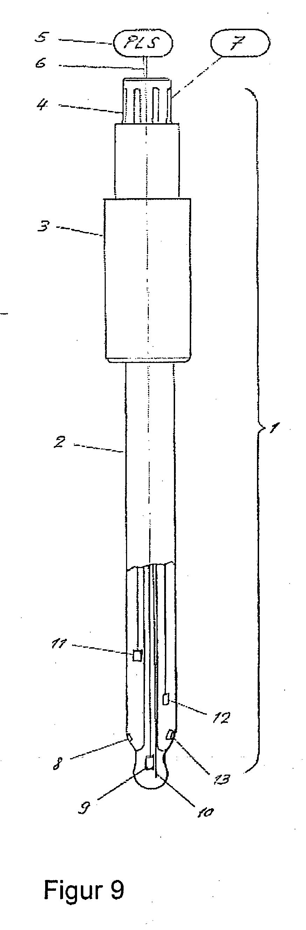

Bevorzugte Ausgestaltungen erfindungsgemäßer Messvorrichtungen sind in den Fig. 9 bis 11 dargestellt:
Figur 9 zeigt die schematische Darstellung einer erfindungsgemässen Vorrichtung zur Bestimmung und Überwachung des pH- Wertes, anhand eines pH- Messgerätes. Das pH-Messgerät 1 vereint eine Elektronikeinheit 3 untrennbar mit einem pH - Sensor 2 als Einstabmesskette ausgeführt, wobei das Messgerät 1 vorzugsweise über einen Stecker 4 mittels eines Kabels 6 mit dem Prozessleitsystem 5 verbunden ist. Es kann aber auch ein Fixkabel zum Anschluss an die übergeordnete Einheit am Messgerät befestigt sein. Bei Bedarf kann das Messgerät an eine externe Stromversorgung 7 angeschlossen werden. Der pH-Sensor ist beispielhaft mit einer Ableitung 10 für das Potential der Glaselektrode, einem Diaphragma 8 im Referenzelektrolytraum, Temperaturfühler 9, einer ersten Referenzelektrode 11, einer zweiten Referenzelektrode 12 sowie mit einem Solution Ground 13 ausgestattet.

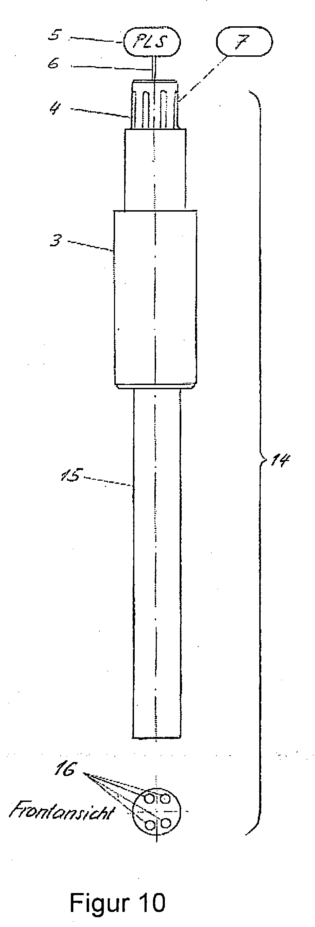

Figur 10 zeigt die schematische Darstellung einer erfindungsgemässen Vorrichtung zur Bestimmung und Überwachung der Leitfähigkeit, anhand eines Leitfähigkeitsmessgerätes. Das Leitfähigkeitsmessgerät 14 vereint eine Elektronikeinheit 3 untrennbar mit einem Leitfähigkeitssensor 15, wobei das Messgerät 14 über einen Stecker 4 über Kabel 6 mit dem Prozessleitsystem 5 verbunden ist. Es kann aber auch ein Fixkabel zum Anschluss an die übergeordnete Einheit am Messgerät befestigt sein. Bei Bedarf kann das Messgerät an eine externe Stromversorgung 7 angeschlossen werden. Der Leitfähigkeitssensor 15 ist als 4-Pol-Sensor ausgelegt und verfügt über 2 Strom- und 2 Spannungselektroden 16.
Figur 11 zeigt die schematische Darstellung der Elektronikeinheit 3 eines erfindungsgemässen Messgerätes, die untrennbar mit einer beliebigen Sensoreinheit 22 und über Verbindungskabel 6 lösbar mit dem Prozessleitsystem 5 verbunden ist. Die Elektronikeinheit 3 ist derart ausgestaltet, dass sie Mittel aufweist 17, 18, die die Funktion des Sensors gewährleisten. Dies sind die zum Teil notwendige Generierung von Signalen an den Sensor, Aufnahme und gegebenenfalls Verstärkung der Messdaten des Sensors, weiterhin deren Digitalisierung, Verarbeitung und Weiterleitung sowie die Überwachung des Sensor-Zustandes und Speicherung sensorrelevanter Daten. Diese Funktionen werden arbeitsteilig von den Funktionsblöcken 17 und 18 übernommen. D.h. die Generierung von Signalen, die Aufnahme, Verstärkung und Digitalisierung der Messdaten erfolgt zum Beispiel vom Funktionsblock 17, während die Verarbeitung, die Weiterleitung sowie die Überwachung des Sensor-Zustandes und Speicherung sensorrelevanter Daten hauptsächlich durch den Funktionsblock 18 übernommen werden. Die Arbeitsteilung zwischen den Funktionsblöcken 17 und 18 kann variabel gestaltet werden und auf die Erfordernisse einzelner Sensortypen angepasst werden. Über ebenfalls in der Elektronikeinheit 3 untergebrachte Schnittstellen 19, 20 kann das Messgerät sowohl digital über die digitale Schnittstelle 20, beispielhaft als RS-485 - Schnittstelle ausgeprägt, direkt kommunizieren als auch analog über eine 4-20 mA Schnittstelle 19 mit dem Prozessleitsystem 5 direkt verbunden sein. In der Elektronikeinheit 3 ist gleichzeitig die galvanische Trennung zwischen dem Messmedium einerseits und der übergeordneten Einheit und der Energieversorgung andererseits realisiert. Die Stromversorgung der Elektronikeinheit 3 und damit des ganzen Messgerätes kann optional über die 4-20 mA Schnittstelle 19 aber auch mittels einer externen Stromversorgung 7 erfolgen. Die Auswahl der Stromversorgung kann gegebenenfalls automatisch mit Hilfe der Vorrichtung 21 erfolgen.

### Ausführungsbeispiel 1

Das in Figur 9 dargestellte pH- Messgerät, weist einen pH- Sensor in Form einer Einstabmesskette auf, der neben einer gebräuchlichen ersten Referenzelektrode und einem Temperaturfühler noch eine zweite Referenzelektrode sowie einen Solution Ground aufweist. Mit Hilfe dieser zusätzlichen Mittel ist es möglich, neben der eigentlichen pH- und Temperaturmessung die üblichen Parameter zur Selbstüberwachung von pH- Sensoren, die Glasimpedanz als auch die Impedanz des Diaphragmas zu bestimmen.

Des Weiteren kann die Potentialdifferenz zwischen den zwei Referenzelektroden, von denen eine weniger stabil ist und auf den Verlust von Chlorid- Ionen im Referenzelektrolyten eher reagiert, permanent bestimmt werden. In der Elektronikeinheit des erfindungsgemässen Messgerätes sind entsprechende elektronische Mittel integriert, mit denen neben dem pH-Wert und der Temperatur auch diese Parameter gemessen werden können. Im Verlauf des Sensorbetriebes werden die gemessenen Parameter permanent mit den jeweiligen im Messgerät werks- oder kundenseitig gespeicherten Grenzwerten, welche für den jeweiligen pH- Sensor-Typ spezifisch sein können, verglichen. Aus diesem Vergleich können der Status des Sensors und gegebenenfalls Warnungen und Fehlermeldungen abgeleitet und direkt in analoger und/oder digitaler Form dem Prozessleitsystem signalisiert werden.

Die für einen pH- Transmitter üblichen Funktionen wie z.B. eine Temperaturkompensation, die Hinterlegung von Pufferdaten zur automatischen Kalibrierung, Speicherung von Kalibrierdaten, z.B. Steilheit, Asymmetrie und Isothermenschnittpunkt, und der Sensorhistorie sind in dem erfindungsgemässen Messgerät möglich und vorgesehen. Darüber hinaus ermöglicht die Untrennbarkeit der Elektronikeinheit vom Sensor die permanente Abspeicherung der bei der Werkskalibrierung anfänglich ermittelten Kalibrieraber auch anderer relevanter sensorspezifischer Daten, so dass die Veränderung des Sensors im Laufe seines Betriebes oder auch danach verfolgt und analysiert werden kann, ohne dass auf externe Datenspeicher zurückgegriffen werden muss. Besondere Situationen, denen der Sensor ausgesetzt ist, wie z. B. hohe Temperaturen, extreme pH-Werte o. ä., können registriert, gezählt, die Folgen für den Sensor bewertet und die Sensorparameter allenfalls angepasst werden.

Weiter wird der Messvorgang im Sensor kontinuierlich auf die Anforderungen an den Messprozess unter Vorgabe gewisser Konfigurationseinstellungen optimiert. Beispielsweise passen sich Integrationszeiten oder gleitende Mittelwertbildung an die sich ändernden Messbedingungen an.

In dem erfindungsgemässen pH- Messgerät sind nicht nur Funktionen integriert, welche die Unversehrtheit und Funktionstüchtigkeit des Sensorelementes prüfen, sondern ebenfalls die der Elektronikeinheit. So werden beispielsweise Überspannungen, Unterbrüche, Kurzschlüsse u. ä. registriert und Folgeaktionen wie Warn- und Fehlermeldungen ausgelöst.

### Ausführungsbeispiel 2

Das in Figur 10 dargestellte Ausführungsbeispiel zeigt ein erfindungsgemässes Leitfähigkeitsmessgerät, welches einen kontaktierenden 4-Pol-Leitfähigkeitssensor aufweist. Da die Elektronikeinheit untrennbar mit dem Sensor verbunden ist, können werksseitig die Form der eingespeisten Wechselsignale, die Anregungsfrequenzen und Verstärkungen als auch Algorithmen für die Signalauswertung programmiert werden, welche für die jeweiligen Leitfähigkeitswerte für diesen Sensor optimal hinsichtlich Verfälschungen durch Polarisationseffekte sind. Kapazitive Effekte durch Anschlussleitungen entfallen weitestgehend, da die Elektroden des Sensors unmittelbar an die Elektronikeinheit, also an den Transmitter angeschlossen sind. Der Leitfähigkeitssensor verfügt über einen Temperaturfühler (nicht dargestellt) der ebenfalls an die Elektronikeinheit angeschlossen ist.

Die für einen Leitfähigkeits-Transmitter üblichen Funktionen wie z.B. eine Temperaturkompensation, die Hinterlegung von Pufferdaten zur automatischen Kalibrierung, Speicherung von Kalibrierdaten, z.B. der Zellkonstante und der Sensorhistorie sind in dem erfindungsgemässen Messgerät möglich und vorgesehen. Darüber hinaus ermöglicht die Untrennbarkeit der Elektronikeinheit vom Sensor die permanente Abspeicherung der bei der Werkskalibrierung anfänglich ermittelten Kalibrier- aber auch anderer relevanter sensorspezifischer Daten, so dass die Veränderung des Sensors im Laufe seines Betriebes aber auch danach verfolgt und analysiert werden kann, ohne dass auf externe Datenspeicher zurückgegriffen werden muss. Besondere Situationen, denen der Sensor ausgesetzt ist, wie z. B. hohe Temperaturen, hohe Leitfähigkeiten können registriert, gezählt, die Folgen für den Sensor bewertet und die Sensorparameter allenfalls angepasst werden.

Weiter wird der Messvorgang im erfindungsgemässen Messgerät kontinuierlich auf die Anforderungen an den Messprozess unter Vorgabe gewisser Konfigurationseinstellungen optimiert. Beispielsweise passen sich Integrationszeiten oder gleitende Mittelwertbildung an die sich ändernden Messbedingungen an.

In dem erfindungsgemässen Leitfähigkeitsmessgerät sind nicht nur Funktionen integriert, welche die Unversehrtheit und Funktionstüchtigkeit des Sensorelementes prüfen, sondern ebenfalls die der Elektronikeinheit. So werden beispielsweise Überspannungen, Unterbrüche, Kurzschlüsse u. ä. registriert und Folgeaktionen wie Warn- und Fehlermeldungen ausgelöst.

### Bezugszeichenliste

- 1: pH- Messgerät
- 2: pH- Sensor
- 3: Elektronikeinheit
- 4: Kontaktstecker
- 5: Prozessleitsystem
- 6: Verbindungskabel
- 7: externe Stromversorgung
- 8: Diaphragma
- 9: Temperaturfühler, z.B. NTC, Pt100, Pt1000
- 10: pH- Ableitung
- 11: erste Referenzelektrode
- 12: zweite Referenzelektrode
- 13: Solution Ground
- 14: Leitfähigkeitsmessgerät
- 15: 4- Pol Leitfähigkeitssensor
- 16: Strom- und Spannungselektroden
- 17: Messumformer
- 18: Interface
- 19: 4-20 mA Schnittstelle
- 20: digitale Schnittstelle, z.B. RS-485 Schnittstelle
- 21: Stromversorgungsautomatik
- 22: beliebiger Prozess- Sensor
- 101: Elektronikmodul
- 102: Prozesssensor
- 103: Bediengerät
- 104: Steckverbinder
- 105: LED
- 106: RF
- 107: Antenne
- 108: Sekundäre digitale Schnittstelle
- 109: VCC
- 110: 4-20mA 1
- 111: 4-20mA 2
- 112: RS-485
- 113: Mikroprozessor
- 114: Energieversorgung
- 115: Dockingstation
- 116: USB Stick
- 117: Schnittstelle für Prozesssensor
- 118: USB-Anschluß

## Patentansprüche

1. Prozesssensorsystem, umfassend ein Elektronikmodul (101), einen mit dem Elektronikmodul (101) trennbar verbundenen Prozesssensor (102) und ein separates, mit dem Elektronikmodul (101) trennbar verbundenes Bediengerät (103), wobei das Elektronikmodul (101) umfasst:
einen Mikroprozessor (113) mit einer Speichereinheit,
eine Mehrzahl von digitalen Schnittstellen (112), und
ein Mittel zur Weiterleitung von analogen Signalen von dem Prozesssensor (102) an ein Prozessleitsystem (105); wobei
der Prozesssensor (102), welcher zur Bestimmung und Überwachung mindestens einer chemischen oder physikalischen Messgröße eines Messmediums ausgebildet ist, umfasst:
eine Sensoreinheit (22) zur Erfassung der chemischen oder physikalischen Messgröße und Generierung von analogen Messdaten,
eine mit der Sensoreinheit (22) untrennbar verbundene Elektronikeinheit (3), umfassend:
einem Mittel zur Überwachung des Sensorzustandes,
ein Mittel zur Digitalisierung der analogen Messdaten aus der Sensoreinheit (22),
ein Mittel zur Weiterleitung der analogen und digitalisierten Daten,
mindestens eine analoge Schnittstelle (19) zur Verbindung des Prozesssensors (102) mit dem Prozessleitsystem (105) und
mindestens eine digitale Schnittstelle (20) zur Verbindung des Prozesssensors (102) mit dem Prozessleitsystem (105) sowie
eine galvanische Trennung zwischen dem Messmedium und den Schnittstellen (19, 20).

2. Prozesssensorsystem nach Anspruch 1, wobei der Prozesssensor (102) ferner ein Mittel zur selbstständigen Überprüfung sowohl der Funktion und des Zustands der Elektronikeinheit (3) als auch der Funktion und des Zustands des Prozesssensors (102) umfasst.

3. Prozesssensorsystem nach Anspruch 1 oder 2, wobei die Mehrzahl der digitalen Schnittstellen (112) des Elektronikmoduls (101) umfasst:
eine erste digitale Schnittstelle zur drahtgebundenen Kommunikation zwischen Elektronikmodul (101) und Prozessensor (102), und
eine zweite digitale Schnittstelle zur drahtgebundenen Kommunikation zwischen Elektronikmodul (101) und dem Prozessleitsystem (105).

4. Prozesssensorsystemnach Anspruch 3, wobei die Mehrzahl der digitalen Schnittstellen (112) des Elektronikmoduls (1) ferner umfasst:
eine dritte digitale Schnittstelle ausgebildet als Funkschnittstelle mit Sende-und Empfangseinheit, und/oder
eine vierte digitale Schnittstelle zur Kommunikation zwischen dem Elektronikmodul (101) und dem Bediengerät (103).

5. Prozesssensorsystem nach einem der vorhergehenden Ansprüche, wobei das Elektronikmodul (101) einen ersten mehrpoligen Steckverbinder (104) zur Verbindung mit dem Prozesssensor (102) sowie einen zweiten mehrpoligen Steckverbinder (104) zur Verbindung mit einem Prozessleitsystem (105) aufweist.

6. Prozesssensorsystem nach einem der vorhergehenden Ansprüche, wobei das Elektronikmodul (101) Signalmittel (105) aufweist.

7. Prozesssensorsystem nach Anspruch 6, wobei die Signalmittel (105) optische oder akustische Signale aussenden.

8. Prozesssensorsystem nach einem der vorhergehenden Ansprüche, die Sensorelektronikeinheit (3) des Prozesssensors (102) umfassend mindestens ein Mittel aus der Gruppe gebildet aus:
einem Mittel zur Verstärkung der analogen Messdaten der Sensoreinheit (22),
einem Mittel zur Verbindung mit einer externen Stromversorgung (7), und
einer Stromversorgungsautomatik (21), die derart ausgebildet ist, zwischen einer Stromversorgung über die mindestens eine analoge Schnittstelle (19) oder dem Mittel zur Verbindung mit einer externen Stromversorgung (7) automatisch zu wählen.

9. Prozesssensorsystem nach Anspruch 8, wobei die Sensorelektronikeinheit (3) einen ersten Funktionsblock (17) und einen zweiten Funktionsblock (18) aufweist, wobei der erste Funktionsblock (17) das Mittel zur Digitalisierung der Messdaten und das Mittel zur Verstärkung der Messdaten umfasst, und der zweite Funktionsblock (18) das Mittel zur Überwachung des Sensorzustandes, das Mittel zur Weiterleitung der Messdaten und das Mittel zur Speicherung umfasst.

10. Prozesssensorsystem nach einem der vorhergehenden Ansprüche, wobei die analoge Schnittstellen 4-20 mA Schnittstellen sind und/oder die digitalen Schnittstellen RS-485 Schnittstellen sind.

11. Prozesssensorsystem nach einem der vorhergehenden Ansprüche, wobei das Bediengerät (103) ein Display aufweist.

12. Prozesssensorsystem nach einem der vorhergehenden Ansprüche, wobei das Bediengerät (103) zur gleichzeitigen Verbindung mit mehreren Prozesssensoren (102) und Elektronikmodulen (101) adaptiert ist.

13. Prozesssensorsystem nach einem der vorhergehenden Ansprüche, ferner umfassend eine Dockingstation (115) zur Aufnahme eines Bediengerätes (103) und zu dessen Stromversorgung, wobei die Dockingstation (115) eine Schnittstelle (117) aufweist, über welche das Bediengerät (103) mit einem an die Dockingstation (115) drahtgebundenen Prozesssensor (102) in eine digitale Kommunikation bringbar ist.

14. Prozesssensorsystem nach Anspruch 13, wobei die Stromversorgung des Bediengerätes (103) über eine mit der Dockingstation (115) integral ausgebildeten Stromquelle erfolgt.

15. Prozesssensorsystem nach Anspruch 13 oder 14, wobei die Dockingstation (115) ferner einen USB Anschluss (118) zur Anbindung eines externen Speichermediums (116) aufweist.

## Claims

1. A process sensor system, comprising an electronic module (101), a process sensor (102) separably connected to the electronic module (101) and a separate operating apparatus (103) separably connected to the electronic module (101), wherein
the electronic module (101) comprises:
a microprocessor (113) with a storage unit,
a plurality of digital interfaces (112), and
a means for transferring analogous signals from a process sensor (102) to a process control system (105); wherein
the process sensor (102), which is designed to determine and monitor at least one chemical or physical measurement variable of a measuring medium, comprises:
a sensor unit (22) for capturing the chemical or physical measurement variable and for generating analogous measurement data,
an electronic unit (3) inseparably connected to the sensor unit (22) and comprising:
a means for monitoring the state of the sensor,
a means for digitising the analogous measurement data from the sensor unit (22),
a means for transferring the analogous and digitised data,
at least one analogous interface (19) for connecting the process sensor (102) to the process control system (105) and
at least one digital interface (20) for connecting the process sensor (102) to the process control system (105) and
a galvanic isolation between the measuring medium and the interfaces (19, 20).

2. The process sensor system according to claim 1, wherein the process sensor (102) further comprises a means to independently check both the functioning and state of the electronic unit (3) and the functioning and state of the process sensor (102).

3. The process sensor system according to claim 1 or 2, wherein the plurality of digital interfaces (112) of the electronic module (101) comprises:
a first digital interface for wired communication between the electronic module (101) and the process sensor (102), and
a second digital interface for wired communication between the electronic module (101) and the process control system (105).

4. The process sensor system according to claim 3, wherein the plurality of digital interfaces (112) of the electronic module (1) further comprises:
a third digital interface, designed as a radio interface having a transmitting and a receiving unit, and/or
a fourth digital interface for communication between the electronic module (101) and the operating apparatus (103).

5. The process sensor system according to any one of the preceding claims, wherein the electronic module (101) has a first multipole connector (104) for connection to the process sensor (102) and a second multipole connector (104) for connection to a process control system (105).

6. The process sensor system according to any one of the preceding claims, wherein the electronic module (101) has signalling means (105).

7. The process sensor system according to claim 6, wherein the signalling means (105) emit optical or acoustic signals.

8. The process sensor system according to any one of the preceding claims, the sensor electronic unit (3) of the process sensor (102) comprising at least one means selected from the group of:
a means for amplifying the analogous measurement data of the sensor unit (22),
a means for connection to an external power supply (7), and
an automatic power supply (21), designed so as to choose automatically between a power supply via the at least one analogous interface (19) or the means for connection to an external power supply (7).

9. The process sensor system according to claim 8, wherein the sensor electronic unit (3) has a first functional block (17) and a second functional block (18), wherein the first functional block (17) comprises the means for digitising the measurement data and the means for amplifying the measurement data, and the second functional block (18) comprises the means for monitoring the state of the sensor, the means for transferring the measurement data and the means for storage.

10. The process sensor system according to any one of the preceding claims, wherein the analogous interfaces are 4-20 mA interfaces and/or the digital interfaces are RS-485 interfaces.

11. The process sensor system according to any one of the preceding claims, wherein the operating apparatus (103) has a display.

12. The process sensor system according to any one of the preceding claims, wherein the operating apparatus (103) is adapted for simultaneous connection to multiple process sensors (102) and electronic modules (101).

13. The process sensor system according to any one of the preceding claims, further comprising a docking station (115) for receiving an operating apparatus (103) and for supplying it with power, wherein the docking station (115) has an interface (117) via which the operating apparatus (103) can be brought into digital communication with a process sensor (102) wired to the docking station (115).

14. The process sensor system according to claim 13, wherein the operating apparatus (103) is supplied with power via a power source which is integrally formed with the docking station (115).

15. The process sensor system according to claim 13 or 14, wherein the docking station (115) further comprises a USB port (118) for connecting an external storage medium (116).

## Revendications

1. Système de capteur de processus, comprenant un module électronique (101), un capteur de processus (102) raccordé de façon détachable au module électronique (101) et un appareil de commande (103) séparé raccordé de façon détachable au module électronique (101), le module électronique (101) comprenant :
un microprocesseur (113) avec une unité de mémoire,
une pluralité d'interfaces numériques (112), et
un moyen de transmission de signaux analogiques depuis le capteur de processus (102) vers un système de commande de processus (105) ;
le capteur de processus (102), qui est constitué pour la détermination et la surveillance d'au moins une grandeur de mesure chimique ou physique d'un fluide de mesure, comprenant :
une unité de capteur (22) pour la saisie de la grandeur de mesure chimique ou physique et la production de données de mesure analogiques,
une unité électronique (3) raccordée de façon non détachable à l'unité de capteur (22), comprenant
un moyen de surveillance de l'état de capteur,
un moyen de numérisation des données de mesure analogiques en provenance de l'unité de capteur (22),
un moyen de transmission des données analogiques et numérisées,
au moins une interface analogique (19) pour le raccordement du capteur de processus (102) au système de commande de processus (105), et
au moins une interface numérique (20) pour le raccordement du capteur de processus (102) au système de commande de processus (105), ainsi
qu'une séparation galvanique entre le fluide de mesure et les interfaces (19, 20).

2. Système de capteur de processus selon la revendication 1, le capteur de processus (102) comprenant également un moyen de vérification autonome aussi bien du fonctionnement et de l'état de l'unité électronique (3) que du fonctionnement et de l'état du capteur de processus (102).

3. Système de capteur de processus selon la revendication 1 ou 2, la pluralité d'interfaces numériques (112) du module électronique (101) comprenant :
une première interface numérique pour la communication filaire entre le module électronique (101) et le capteur de processus (102), et
une deuxième interface numérique pour la communication filaire entre le module électronique (101) et le système de commande de processus (105).

4. Système de capteur de processus selon la revendication 3, la pluralité d'interfaces numériques (112) du module électronique (1) comprenant également :
une troisième interface numérique constituée en tant qu'interface radio avec unité d'émission et de réception, et/ou
une quatrième interface numérique pour la communication entre le module électronique (101) et l'appareil de commande (103).

5. Système de capteur de processus selon une des revendications précédentes, le module électronique (101) présentant un premier connecteur multibroche (104) pour le raccordement au capteur de processus (102), ainsi qu'un deuxième connecteur multibroche (104) pour le raccordement à un système de commande de processus (105).

6. Système de capteur de processus selon une des revendications précédentes, le module électronique (101) présentant des moyens de signalisation (105).

7. Système de capteur de processus selon la revendication 6, les moyens de signalisation (105) émettant des signaux optiques ou acoustiques.

8. Système de capteur de processus selon une des revendications précédentes, l'unité électronique de capteur (3) du capteur de processus (102) comprenant au moins un moyen issu du groupe constitué des éléments suivants :
un moyen d'amplification des données de mesure analogiques de l'unité de capteur (22),
un moyen de raccordement à une alimentation électrique externe (7), et
un système automatique d'alimentation électrique (21) qui est constitué de façon à opérer automatiquement une sélection entre une alimentation électrique par le biais de l'interface analogique (19) au moins au nombre de un et le moyen de raccordement à une alimentation électrique externe (7).

9. Système de capteur de processus selon la revendication 8, l'unité électronique de capteur (3) présentant un premier bloc fonctionnel (17) et un deuxième bloc fonctionnel (18), le premier bloc fonctionnel (17) comprenant le moyen de numérisation des données de mesure et le moyen d'amplification des données de mesure, et le deuxième bloc fonctionnel (18) comprenant le moyen de surveillance de l'état de capteur, le moyen de transmission des données de mesure et le moyen de mise en mémoire.

10. Système de capteur de processus selon une des revendications précédentes les interfaces analogiques étant des interfaces 4-20 mA et/ou les interfaces numériques étant des interfaces RS-485.

11. Système de capteur de processus selon une des revendications précédentes, l'appareil de commande (103) présentant un afficheur.

12. Système de capteur de processus selon une des revendications précédentes, l'appareil de commande (103) étant adapté pour le raccordement simultané à plusieurs capteurs de processus (102) et modules électronique (101).

13. Système de capteur de processus selon une des revendications précédentes, comprenant également une station d'accueil (115) pour recevoir un appareil de commande (103) et pour l'alimentation électrique de ce dernier, la station d'accueil (115) présentant une interface (117) par le biais de laquelle l'appareil de commande (103) peut être amené à une communication numérique avec un capteur de processus (102) raccordé par fil à la station d'accueil (115).

14. Système de capteur de processus selon la revendication 13, l'alimentation électrique de l'appareil de commande (103) s'effectuant par le biais d'une source de courant constitué d'un seul tenant avec la station d'accueil (115).

15. Système de capteur de processus selon la revendication 13 ou 14, la station d'accueil (115) présentant également une connexion USB (118) destinée à la connexion d'un support de mémoire externe (116).
